(19) Europäisches Patentamt
European Patent Office
Office européen des brevets

(11) **EP 2 930 617 A1**

(12) **EUROPEAN PATENT APPLICATION**

(43) Date of publication:
**14.10.2015 Bulletin 2015/42**

(51) Int Cl.:
***G06F 9/50*** *(2006.01)*

(21) Application number: **14305525.9**

(22) Date of filing: **10.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Rößler, Horst**
  **70435 Stuttgart (DE)**

• **Derakhsan, Fariborz**
  **90411 Nuernberg (DE)**
• **Schefczik, Peter**
  **70435 Stuttgart (DE)**

(74) Representative: **Lück, Stephan et al**
**Alcatel-Lucent Deutschland AG**
**Intellectual Property Business Group**
**Lorenzstraße 10**
**70435 Stuttgart (DE)**

(54) **Resource management method and device**

(57)     The invention refers to a resource management method (53) and device (23) for managing computational resources (27) of a baseband processing arrangement (15). In order to estimate the resource consumption of a processing request of a predefined request class more accurately, it is proposed that the method (53) comprise defining (57) an estimated value ( $c_s^0$ ) describing an estimated amount of said resources (27) required for processing the processing request; determining (61) a measured total resource consumption value ($C^t$) describing an occupation of the resources (27) at a point in time; determining (63) a number ( $N_s^t$ ) of processing requests of the predefined request class processed simultaneously by the resources (27) at the point in time; and adapting (65) the estimated value ( $c_s^0$ ) based on the total resource consumption value ($C^t$) and on the number ( $N_s^t$ ) of processing requests.

53

55

$$c_s^0 := c_s^{0,start}$$

57

B

$$\Delta t$$

59

$$C^t$$

61

$$N_s^t$$

63

$$c_s^t(C^t, N_s^t)$$

65

A

**Fig. 3**

**Description**

**Field of the invention**

The present invention refers to a resource management method for managing computational resources of a baseband processing arrangement for a wireless access network. The invention further refers to a resource management device operable for executing such a resource management method. In addition, the invention refers to a computer program product for executing the resource management method.

**Background**

It is known to split a base station for a wireless access network into a baseband processing unit and a remote radio head (distributed base station). The baseband processing unit is adapted for performing at least some processing tasks needed for carrying out communication protocol operations and/or signal processing operations like modulation/demodulation or coding/decoding. The remote radio head comprises radio frequency receive and transmit circuitry for generating a transmit radio frequency signal from a transmit digital baseband signal and for regenerating a receive digital baseband signal from a received radio frequency signal.

The concept of distributed base stations has been extended to a so-called cloud base stations by providing a baseband processing resource pool having multiple baseband processing units. Moreover, multiple remote radio heads, possibly located spaced apart from each other in order to define different radio cells that do not overlap completely, may be connected to the resource pool. Using cloud base stations, allows applying the baseband processing resources more efficiently due to pooling gains. That is, a mean occupation of resource units of the resource pool is typically higher in a cloud base station than in a conventional or distributed base station having base band processing units dedicated to one or more pre-defined remote radio heads. In other words, over-provisioning of computational resources (e.g. CPU resources) can be avoided at least to some extent.

In order to make appropriate scheduling decisions regarding the computational resources of a cloud base station, the resource consumption of individual baseband processing requests should be known before processing of these requests is started.

**Summary**

The object of the present invention is to provide a method and device for managing computational resources of a baseband processing arrangement for a wireless access network that allows to predict accurately the resource consumption of a baseband processing request to be scheduled.

According to an embodiment of the present invention, a resource management method for managing computational resources of a baseband processing arrangement for a wireless access network is provided, the method comprising defining an estimated value describing an estimated amount of said resources required for processing a processing request of a predefined request class; determining a measured total resource consumption value describing an occupation of the resources at a point in time; determining a number of processing requests of the predefined request class processed simultaneously by the resources at the point in time; and adapting the estimated value based on the resource consumption value and on the number of processing requests. By adapting the estimated value based on the resource consumption value measured while the requests are processed, the estimated value is corrected based on the actual resource consumption of the requests. The adapted value reflects the resource consumption of the request more accurately and can thus be used to predict the resource consumption of future request of the same class more precisely. In other words, this adaptive method allows to predict the resource consumption of a request accurately based on the initially defined estimated value, which may be comparatively inaccurate.

Changes in the state of the baseband processing arrangement that affect its performance lead automatically to corresponding changes of the estimated values. For example, some possible implementations of the baseband processing arrangement may work less efficiently in case of a large number of requests to be processed simultaneously e.g. by a single resource unit (such as a core of a multi-processor system) because overhead due to context switches increase and memory access latencies and/or may become more important for a larger number of running requests. In other words, the estimated values may not be constant over all possible operating and/or load states of the baseband processing arrangement. Adapting the estimated values using the method automatically corrects the estimated values according to the momentary state of the baseband processing arrangement. As a consequence, scheduling decisions performed by a resource manager of the access network based on the adapted estimated values can be made more reliably.

In an embodiment, the adapting comprises calculating an adapted estimated value from the estimated value, the total resource consumption value and the number of processing requests. The total resource consumption and the number of processing requests are simple to measure. Consequently, the method can be easily implemented in an existing baseband processing arrangement.

In an embodiment, the adapting is executed iteratively, wherein for at least one iteration; preferably for all iterations performed after an initial iteration; defining the estimated value includes using the adapted value calculated in a previous iteration as the estimated value. This iterative approach allows to increase the accuracy of the estimated value during each iteration. Moreover, the values are continuously recalculated and therefore always reflect accurately the momentary load or operating state of the baseband processing arrangement.

In an embodiment, the method comprises limiting a rate of performed iterations by enforcing a minimum interval between subsequent iterations. In an embodiment, the method may start a new iteration if a new baseband processing request arrives or is otherwise generated. However, if an interval between the last iteration and the time of arrival or generation of the request is less than the minimum interval then the iteration may be delayed until the minimum interval starting at the end of the last iteration has elapsed. In such embodiments, an interval between subsequent points in time related to subsequent iterations is larger than a mean inter-arrival time of the baseband processing requests and/or a scheduling granularity used for scheduling the computational resources and/or radio resources of the network. In a preferred embodiment, the interval may be predefined and may be held constant over a quite large time interval. In some embodiments, the mean inter-arrival time may have the same of magnitude as the scheduling granularity. The scheduling granularity used in wireless communication system is typically in the order of milliseconds (e.g. 1 ms in LTE, up to 10 ms in UMTS). The time interval may be in the order of seconds or minutes. In an exemplary embodiment, the time interval is the scheduling granularity multiplied with a value in the range from 1 000 to 1 000000, preferably 10 000 to 100 000. Using such a comparatively long time interval has the effect that computations related to the method need to be executed rather seldom and the method thus causes little overhead.

In an embodiment, the estimated value and/or the adapted estimated value and the respective number of processing requests are determined separately for multiple predefined request classes. The classed may be defined e.g. according to the type of communication service provided by the respective requests. For example, a first class may be defined for baseband processing requests related to processing of video data. Another class may be defined for baseband processing requests related to processing of audio data like voice data to be transferred over a radio link in a voice call.

The adaption may modify all estimated values depending on the measured total resource consumption value. In order to cope with changes of the resource consumption of requests of one class relatively to the resource consumption of another class, the method may comprise a calibration sequence for determining the estimated resource consumption value for a single class. Thus, in an embodiment, the method comprises calibrating the estimated value based on a measured resource consumption of requests of a certain class and the number of requests of that class simultaneously processed by the resources.

The calibration may be performed accurately and simply if a resource unit (e.g. a processor core of the baseband processing arrangement) executes requests of a single class only. In an embodiment, the calibrating is therefore triggered when a unit of the resources processes requests of a single class only.

In an embodiment, the method comprises deciding if calibration is needed based on an error metric describing a deviation of an estimated total resource consumption value from the measured total resource consumption value. Performing the calibration only when needed reduces the overhead caused by the method. In another embodiment, the method does not include said decision if calibration is needed but just observes at least one resource unit and triggers the calibration when the at least one resource unit processes requests of a single class only.

In an embodiment, the error metric is a relative deviation of the estimated total resource consumption value from the measured total resource consumption value.

In an embodiment, the method comprises preventing a selected resource unit (calibration resource unit) from accepting new requests of a class that differs from a selected calibration class if a result of the deciding is that calibration is needed. Preferably, said preventing is performed until the resource unit processes the requests of the calibration class only. In an embodiment, the method may stop said preventing when the calibration is done for the calibration class so that the resource unit can process requests of any class after the calibration has been completed. In a preferred embodiment, a resource unit is selected as the calibration resource unit that has a maximum number of requests of the same class or of a selected calibration class.

In an embodiment, the method comprises a start-up operating phase during which a modified placement policy for placing processing requests to individual resource units of the processing resources is applied, wherein the modified placement policy differs from a standard policy applied after the start-up operating phase of the method is finished. The start-up phase allows to determine a rather accurate estimated value related to at least one request class quickly.

In an embodiment, the modified placement policy comprises placing requests to the resource units such that at least one resource unit receives requests of a single class. A resource unit may be e.g. a processor core of a multi-processor system.

According to another embodiment of the present invention, a resource management device for a baseband processing arrangement of a wireless access network is provided, the device being operable for defining an estimated value describing an estimated amount of said resources required for processing a processing request of a predefined request class; wherein the device is further operable for determining a measured total resource consumption value describing an occupation of the resources at a point in time; determining a number of processing requests of the predefined request class processed simultaneously by the resources at the point in time; and adapting the estimated value based on the total resource consumption value and on the number of processing requests.

In an embodiment, the device is operable, preferably programmed, for executing a resource management method described herein.

In an embodiment, the device may be a baseband processing unit of a baseband processing arrangement of a wireless access network. The device may include a computer system, preferably a multi-processor computer system comprising multiple central processing units, also referred to as "cores". At least one of the cores may be programmed for executing the method.

According to yet another embodiment of the present invention, a computer program product, preferably a computer readable storage medium is provided, the computer program product comprising a computer program that is programmed for executing a resource management method described herein when run on a computer such as a baseband processing unit of the baseband processing arrangement.

## Brief description of the figures

Exemplary embodiments and further advantages of the present invention are shown in the Figures and described in detail hereinafter.

Figure 1        shows a network of a mobile communication system, the network comprising a core network and a radio access network;

Figure 2        shows a block diagram of a baseband processing unit of a baseband processing node of the access network shown in Figure 1;

Figures 3 and 4    show a flowchart of a resource management method;

Figure 5        shows flowchart of a request dispatcher of the resource management method;

Figure 6        shows a step of the flowchart of Figures 3 and 4 in more detail; and

Figure 7        shows a further step of the flowchart of Figures 3 and 4 in more detail.

## Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

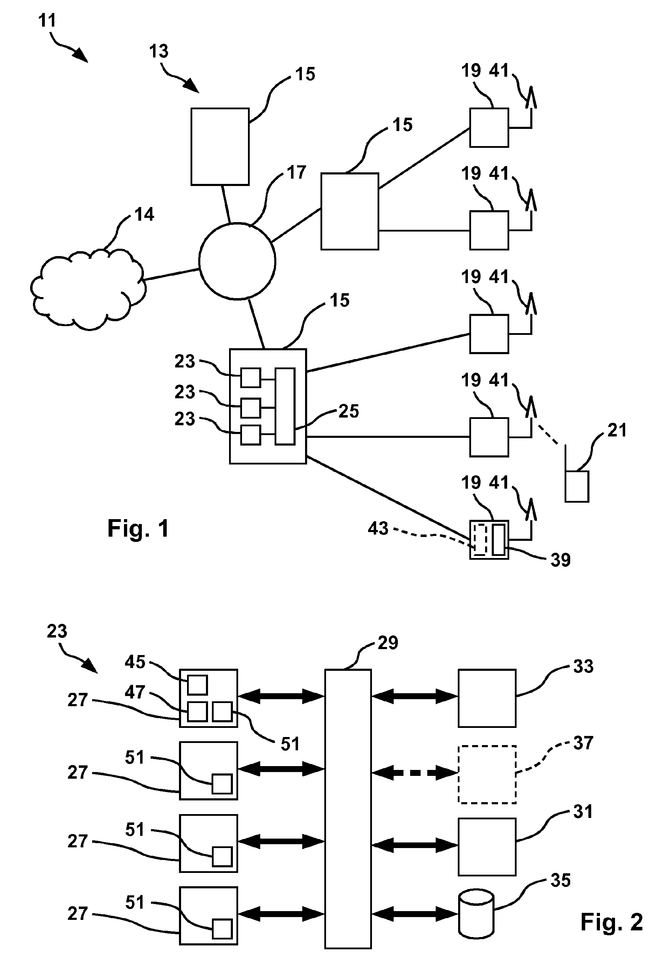

Figure 1 shows a wireless communication network 11 of a mobile communication system. In the shown embodiment, the communication system is a system according to the Third Generation Partnership (3GPP) specification. The communication system may be the Long Term Evolution (LTE) system, the Universal Mobile Telecommunications System (UMTS), the Global System for Mobile communications (GSM) or a multistandard system that supports a combination of LTE, UMTS and GSM.

However, the devices and methods described herein may be applied in connection with any type of communication system or wireless networks.

The network 11 comprises a wireless access network 13 connected to a core network 14. In the shown embodiment, the core network 14 complies with the technical specification LTE and is therefore also referred to as Evolved Packet Core (EPC). In another embodiment, the core network 14 may be a core network for GSM or for UMTS. In addition, multiple core networks 14 of different type may be connected to the access network 11.

The access network 13 comprises one or more baseband processing nodes 15, which are interconnected to each other by means of an interconnection network 17. The interconnection network 17 may also be applied to connect the core network 14 to at least one, preferably all, baseband processing nodes 15. Although any type of network technology may be used for implementing the interconnection network 17, the shown interconnection network is an optical network, preferably a Passive Optical Network (PON). The PON allows for high bitrate and low latency transmissions between the interconnected baseband processing nodes 15 of the access network 13.

Some baseband processing nodes 15 or all baseband processing nodes 15 of the access network 13 may be connected to at least one Remote Radio Head (RRH 19) of the access network 13. In the shown embodiment, dedicated communication links (e.g. optical links) are used to connect the remote radio heads 19 to a baseband processing node 15. In another embodiment, the remote radio heads 19 may be connected to the baseband processing node 15 by means of an additional PON or by means of the interconnection network 17 (not shown in Figure 1).

The baseband processing nodes 15 are arranged for performing baseband processing tasks including processing of communication protocols, coding/decoding and/or modulation/demodulation. A baseband processing task may be instantiated when a baseband processing request is generated in the access network 13 or received by the access network 13. For example, a baseband processing request may be generated when a radio bearer related to a radio terminal 21 shall be set up and baseband processing resources are needed for the protocol handling, coding/decoding and/or modulation/demodulation related to this radio bearer.

The baseband processing request related to a certain terminal 21 may be processed by the baseband processing node 15 connected to the remote radio head 19 (local baseband processing node) that communicated with the terminal. However, it is also possible that the request may be processed by a different (i.e. remote) baseband processing node 15. When performing this kind of remote processing, the local baseband processing node 15 and the remote baseband processing node 15 exchange data related to the baseband processing request over the interconnection network 17. In other words, the baseband processing nodes 15 constitute a pool of baseband processing resources; each baseband processing node 15 can be used for baseband processing related to a any terminal 21 registered with the access network 13 regardless of the remote radio head 19 used for radio communication with the respective terminal 21. The access network 13 that has such a high degree of freedom in term of baseband processing resource assignment is also referred to as "cloud radio access network" or "cloud base station". In some situations, it may be reasonable to deploy a baseband processing node 15 to which no remote radio heads 19 are assigned (see baseband processing node 15 shown at the top of Figure 1). Such a baseband processing node 15 functions as a remote baseband processing node only.

A baseband processing node 15 comprises at least one baseband processing unit 23. As shown in Figure 1, a baseband processing node 15 may have multiple baseband processing units 23 and may include an internal interconnection network 25 adapted to interconnect the baseband processing units 23 of a single baseband processing node 15. The internal interconnection network 25 may also have a connection to the interconnection network 17 of the access network 13.

A baseband processing unit 23 may include a programmable computer (further referred to as "processor") that is operable for processing the baseband processing requests. To this end, the processor may include a General Purpose Processor (GPP). A simplified diagram of a baseband unit 23 is shown in Figure 2. The shown exemplary baseband unit 23 is a symmetric multi processor system comprising multiple central processing units (cores 27) connected via an interconnect arrangement 29 to main memory 31. The baseband unit 23 may further comprise a communication interface 33 for connecting the baseband unit 23 with the internal interconnection network 25 and/or the interconnection network 17. Moreover, the baseband unit may include additional peripheral devices such as a mass storage device 35.

In an embodiment, the processor further includes at least one specialized arithmetic unit 37, designed for calculations that are specific to wireless communications, e.g. coding/decoding or modulation/demodulation. These calculations may be offloaded from the cores 27 to the at least one specialized arithmetic unit 37. The specialized arithmetic unit is also referred to as "accelerator" since it typically can improve the overall performance of the baseband unit 23.

As can be seen in Figure 1, a remote radio head 19 comprises radio frequency circuitry 39 arranged for transforming a digital baseband signal to a radio frequency signal that can be transmitted over an antenna 41 connected to the radio frequency circuitry. Moreover, the radio frequency circuitry 39 is arranged for receiving a radio frequency signal over the antenna 41 and for transforming the received signal in a digital baseband signal. Typically, the radio frequency circuitry comprises a digital-to-analog converter, an up-converter, a transmit power amplifier, a receive Low Noise Amplifier (LNA), a down-converter and an analog-to-digital converter.

In addition, the remote radio head 19 may comprise signal processing circuitry 43 that is arranged for performing some signal processing operations in order to reduce the processing load in the baseband processing nodes 15 and to reduce the communication traffic on the links between the remote radio heads 19 and the baseband processing nodes 15. In another embodiment, at least one remote radio head 19 does not include the signal processing circuitry 43 and all baseband signal processing is performed by the baseband processing nodes 15.

When operating the network 11, baseband processing requests are generated when a new baseband processing task needs to be carried out in the access network 13. A resource management function of the access network 13 decides which baseband processing node 15 shall process the request. Moreover the resource management function may decide which baseband unit 23 shall process the request. In addition, the resource management function may assign a specific core 27 to the request. The so selected core 27 then processes the request. In order to carry out the resource management function, the access network 13 comprises at least one resource manager. For example, the resource manager may be part of a baseband unit 23. The resource manager may be implemented on one of the cores 27, which is illustrated in Figure 2 where the resource manager is shown as a part 45 of one of the cores 27. Accordingly, a computer program may be provided, e.g. stored on one of the memories 31, 35, that is programmed for executing the resource management function when run by the core 27. Moreover, the access network 13 may include multiple instances of the resource manager. For example, a hierarchical structure of resource managers may be provided, with the resource managers of the individual hierarchy levels being operable for assigning baseband processing requests to a baseband processing node 15, a baseband processing unit 23 within a baseband processing node 15 or a core 27 within a baseband processing unit 23, respectively. However, the invention is not limited to this structure of resource managers. In an embodiment, the access network 13 has one or more non-hierarchical resource managers.

The baseband processing requests are related to baseband processing operations that must be carried out in real time in most cases. Typically, a grid in the time-scale leads to real-time constraints because calculations performed during processing of a request must often be synchronized with this grid. In LTE for example, the time grid is defined by subsequent Transmission Time Intervals (TTIs) each having a duration of 1 ms. The resource manager 45 uses estimated values describing an estimated amount of said resources required for processing the individual request for making scheduling decisions related to computational resources of the access network 13. Computational resources (as opposed to radio resources) include all resources of the access network 13 that can carry out baseband processing. The cores 27 therefore are computational resources of the access network 13. Based on the estimated values, the resource manager assigns the requests to resource units of said computational resources, e.g. to individual cores 27, such that overloading the cores 27 is avoided, thereby meeting the real-time constraints.

Correct scheduling decisions require that the estimated value reflect the actual resource consumption of the respective request as accurate as possible. In the following, a method is described that allows for determining the estimated value. In the shown embodiment, the method is carried out by at least one core 27 of the baseband unit 23. A computer program may be stored on a storage medium 31, 35 so that the core 27 may carry out the method when running the computer program. A respective resource estimator 47 that executes the method is shown in Figure 2. The method uses at least one measured total resource consumption value $C^t$ describing an occupation of the computational resources at a point in time. In the shown embodiment, the resource consumption is measured for at least one specific core 27. Preferably, the resource consumption may be measured for each core 27 of a baseband unit 23. Accordingly, at least one core 27 or each core 27 may comprise a resource consumption meter 51 for determining the core specific resource consumption value $C^t$. The resource consumption meter 51 may include a measurement process running on the individual cores 27. The resource consumption may be expressed numerically in the form of a load value in the range from 0.0 to 1.0, which load value describes the relative occupation of the core 27. Alternatively, the resource consumption can be expressed as a number of operations performed in a time unit (throughput measured in operations/s; e.g. thousand operations per second, kops; million operations per second, mops). The load value and the throughput can be converted into each other when the maximum throughput (e.g. operations per second when the core 27 is completely occupied) of the respective core 27 is known.

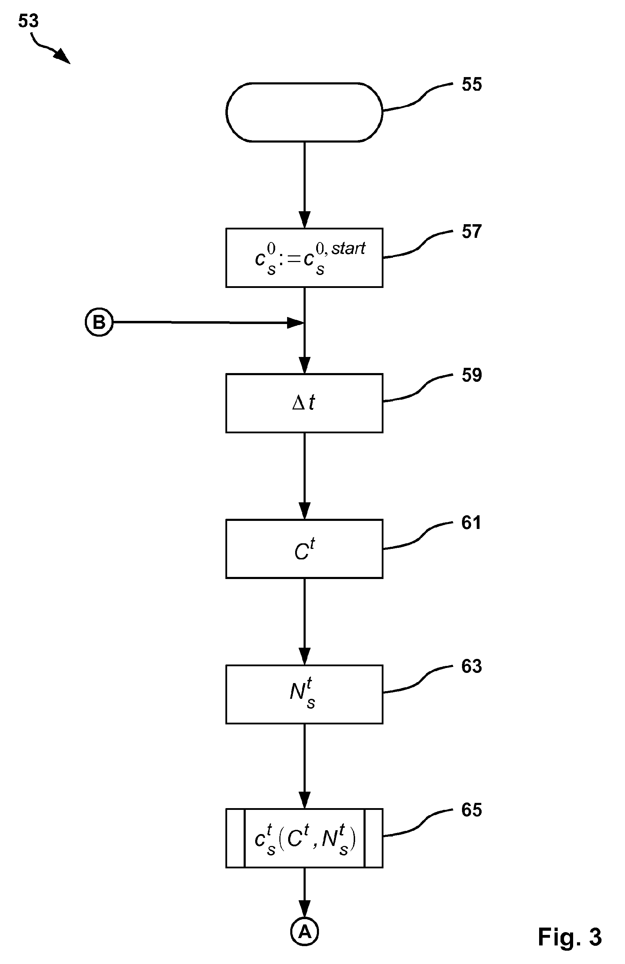

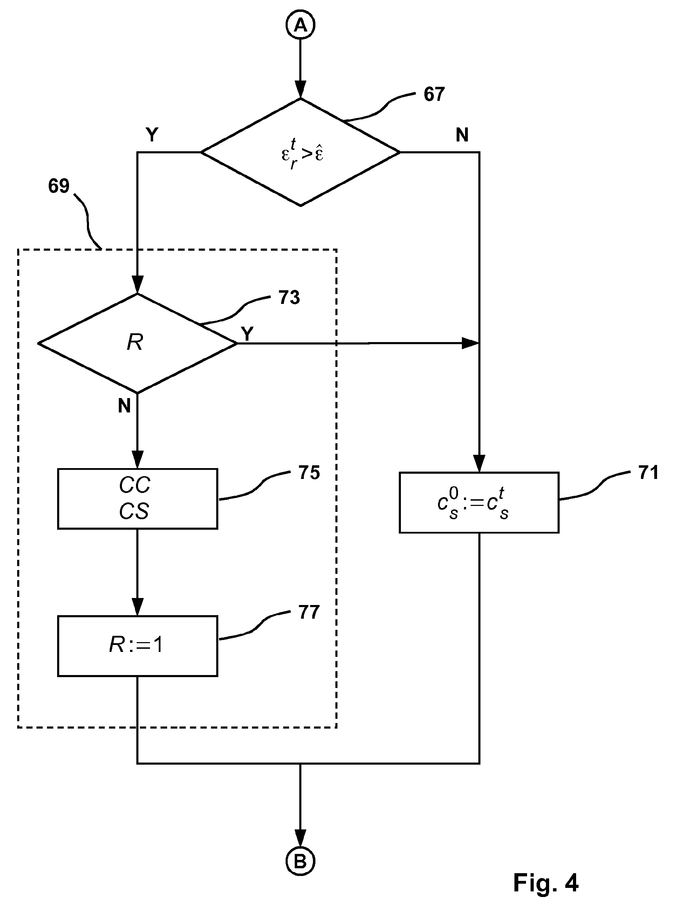

Figures 3 and 4 show a flowchart of the resource management method 53 for managing the computational resources such as the cores 27 of the wireless access network 13. After a start 55, the method executes a step 57 that defines an estimated value $c_s^0$ describing an estimated amount of resources required for processing a processing request of a predefined request class s.

A step 59 of the method 53, which is executed after step 57, waits until a new processing request arrives at the baseband processing unit 23 or is generated within the baseband processing unit 23. In the shown embodiment, step 59 limits an execution time of step 59 to a lower limit of Δt. As a consequence, the steps subsequent to step 59 are not executed with a rate that exceeds 1/Δt even in situations where an inter-arrival time of arriving or generated baseband processing requests is high.

However, in another embodiment, the rate-limiting of the execution of the steps subsequent to step 59 is omitted. In such an embodiment, step 59 completes as soon as a new processing request arrives or is generated regardless of whether or not the interval Δt has elapsed.

In yet another embodiment, step 59 just waits during the interval Δt so that the steps subsequent to step 59 are executed periodically.

After the completion of step 59 a step 61 of the method 53 is executed that determines the measured total resource consumption value $C^t$ of at least one core 27. Step 61 may comprise acquiring the total resource consumption value $C^t$ from a resource consumption meter 51. In one embodiment, the total resource consumption value $C^t$ describes the resource consumption of a group of resource units, e.g. of all cores 27 of a single baseband unit 23. In another embodiment, the total resource consumption value $C^t$ reflects the resource consumption of a single resource unit, e.g. a single core 27. The method 53 comprises a further step 63 to be executed after step 59. Step 63 includes determining the number $N_s^t$ of processing requests of the predefined request class s processed simultaneously. In the shown embodiment the resource consumption meters 51 measure the number $N_s^t$ of currently processed processing requests so that step 63 may acquire the number $N_s^t$ from the at least one resource consumption meter 51.

Based on the results $C^t$, $N_s^t$ of steps 61, 63, a step 65 of the method 53 calculates an adapted value $c_s^t$ for the estimated value $c_s^0$. The adapted value $c_s^t$ being calculated dependent on the momentary operating state of the baseband processing unit 23, describes the resource consumption more precisely and should therefore used by the resource manager 45 for deciding which core 27 shall process a new arriving baseband processing request.

Although the method 53 may be applied in combination with baseband processing systems that have a single class of baseband processing request only, in the shown embodiment, the access network classifies the baseband processing requests according to their resource consumption. For example, baseband processing request related to voice only communications may be assigned to one request class, while baseband processing requests related to video transmissions may be assigned to another request class. Additional request classes may be defined if necessary.

When considering multiple request classes s, steps 63 and 65 may be executed separately for each class so that multiple numbers $N_s^t$ are obtained and the adapted value $c_s^t$ is calculated for each considered class. It should be noted that the method 53 does not need to be applied to every defined request class, i.e. the method 53 may consider a subset of request classes only.

In the embodiment shown in Figure 4, the method 53 has a branch 67 for checking whether a calibration of the estimated values $c_s^0$ is needed. If so (Y), operations (block 69) for initiating a calibration may be executed. Otherwise (N), a step 71 for modifying the estimated values $c_s^0$ is executed. For checking if the calibration is needed, a deviation metric may be calculated. For example, the deviation metric may characterize the relative deviation $\varepsilon_r^t$ of the measured total resource consumption $C^t$ from an estimated (hypothetical) total resource consumption $\widetilde{C^t}$. The estimated total resource consumption may be calculated from the estimated values $c_s^0$ and the number $N_s^t$ of currently processed requests e.g. as follows.

$$\widetilde{C^t} = \sum_{s \in S} N_s^t \cdot c_s^0 \tag{1}$$

The symbol S denotes the set of considered request classes.
The deviation metric may be calculated as follows.

$$\varepsilon_r^t = \frac{\varepsilon^t}{\widetilde{C^t}} = \frac{\left| C^t - \widetilde{C^t} \right|}{\widetilde{C^t}} \tag{2}$$

Step 67 may decide that the calibration is needed if the deviation metric $\varepsilon_r^t$ is greater than a predefined threshold $\hat{\varepsilon}$. It should be noted that in other embodiment any other decision criterion may be applied. A different deviation metric may be applied, too. In an embodiment an absolute deviation metric $\varepsilon^t = \left| C^t - \widetilde{C^t} \right|$ may be used rather than the relative deviation metric $\varepsilon_r^t$.

In an embodiment, step 71 comprises assigning the adapted estimated values $c_s^0$ to the respective estimated values $c_s^0$. Then, the method 53 may return to step 59 so that the above-described steps following step 59 can be executed again after a further interval Δt and/or when a new baseband processing request arrives or is generated.

Consequently, the method 53 works iteratively, where the initial values $c_s^{0,start}$ are chosen as the estimated value $c_s^0$ for the first iteration and where the adapted values $c_s^t$ are calculated in each iteration and used as the estimated value $c_s^0$ for the subsequent iteration.

In another embodiment, the method 53 does not include the calibration block 69. In this embodiment, the branch 67 is omitted and step 71 is executed immediately after step 65.

A branch 73 of the calibration block 69 checks if a redirection flag R is set. If so (Y) then the method 53 continues with step 71. In another embodiment, the method 53 may jump to step 59 if the redirection flag R is set. If the redirection flag R is not set (N), the method 53 executes a step 75. The redirection flag R represents a binary value that may be implemented e.g. as a data structure maintained in the main memory 31 such as a single bit or a machine word. The redirection flag R indicates that a request dispatcher process running e.g. on the baseband processing unit 23 is currently enforcing a scheduling strategy that assigns only request of a certain class (herein referred to as "calibration class" to a selected core 27 (herein referred to as "calibration core").

Step 75 selects a calibration core to be used for the next calibration to be carried out. In the shown embodiment, a core 27 is selected that has, among all other cores 27, the maximum number of running request of the same class. Moreover, step 75 may select this class of the maximum number of running requests as the calibration class to be considered in the next calibration to be carried out. An identifier of the calibration core and/or the calibration class may be stored in respective variables CC and/or CS, which variables may be held in the main memory 31. The selection of the calibration core and calibration class described herein is exemplary. In other embodiments, different selection policies may be applied. For example, the calibration classed used in subsequent calibrations may be changed e.g. in cyclic order so that each class eventually becomes the calibration class. The calibration core may be selected randomly or dependent on its load. For example the less loaded core 27 may be selected as the calibration core. In a very simple embodiment, always the same core 27 could be selected as the calibration core CC.

A step 77 of the method 53, which may be executed after step 75, sets the redirection flag R, thereby instructing the request dispatcher to perform a calibration according to the identifiers stored in the variables CC and CS. After the completion of step 77, the method 53 may continue with step 59.

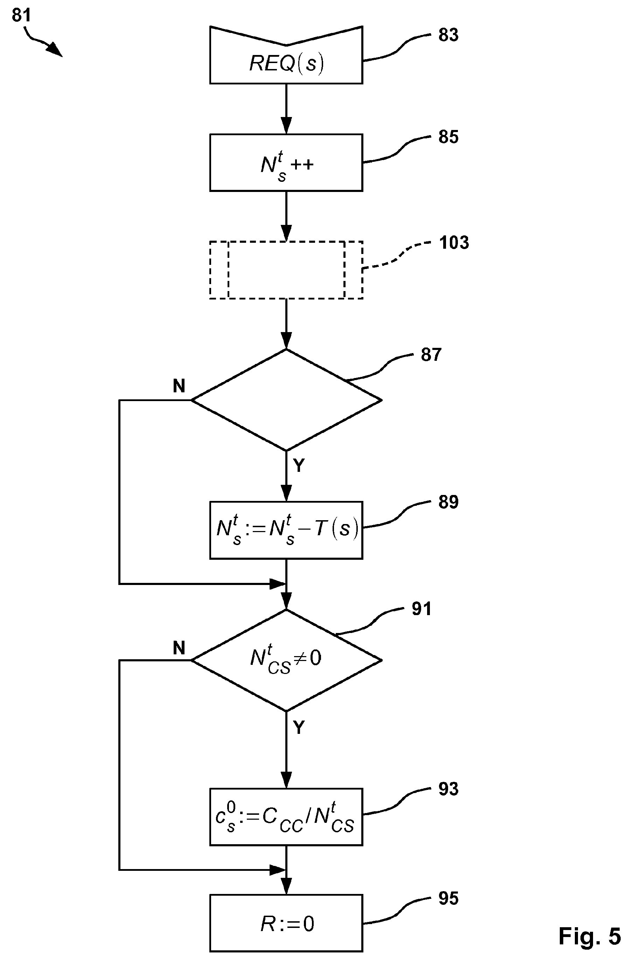

Figure 5 shows a flowchart of the request dispatcher 81 of the method 53. The sequence described by the flowchart is executed when a new baseband processing request REQ(s) of a certain class s is received or generated and should be processed within the access network 13. This is illustrated in 83.

A step 85 of the request dispatcher 81 increments a class specific request counter $N_s^t$.

The request counter $N_s^t$ holds the current number of simultaneously processed requests of class s. The value of the request counter $N_s^t$ may also be used in step 63 for determining the number of processed request after the interval Δt has elapsed.

A branch 87 of the request dispatcher 81 checks whether or not at least one request of class s has terminated. If so (Y), a step 89 subtracts a number T(s) of terminated requests of class s from the request counter $N_s^t$. Otherwise (N), step 89 is skipped.

The request dispatcher 81 has a further branch 91 that checks if all request counters $N_s^t$ are zero except one request counter $N_s^t$, preferably the request counter $N_{CS}^t$ related to the calibration class CS selected in step 75. If so (Y), a calibration step 93 of the request dispatcher 81 is executed. Otherwise (N), the calibration step 93 is skipped. It should be noted that - in the shown embodiment - the calibration step 93 may be executed even in cases where other steps (e.g. block 69) of the method 53 have not requested calibration. That is the calibration 93 may be performed if a resource unit (e.g. a core 27) processes requests of a single class only. An operating state of a resource unit 27 where the resource unit 27 processes request of a single class only is also referred to as a coherent state of that resource unit 27.

The calibration step 93 recalculates the request class specific estimated value $c_s^0$ related to the calibration class. In the shown embodiment, the new estimated value $c_s^0$ is calculated by dividing a measured overall resource consumption $C_{CS}$ of the calibration core CC by the number $N_{CS}^t$ of processed requests. The number of the processed requests is stored in the request counter of the calibration class CS, that is $c_s^0 = \frac{C_{CC}}{N_s^t}$, s = CS. After step 93 has been performed, the estimated value $c_s^0$ related to the calibration class CS reflects more exact (i.e. calibrated) estimation of the resource consumption of a request of the calibration class and may be used by further iterations of the method 53.

When the calculations of step 93 have been completed, a step 95 is performed that resets the redirection flag R. Step 95 is the last step of the sequence of the request dispatcher sequence 81.

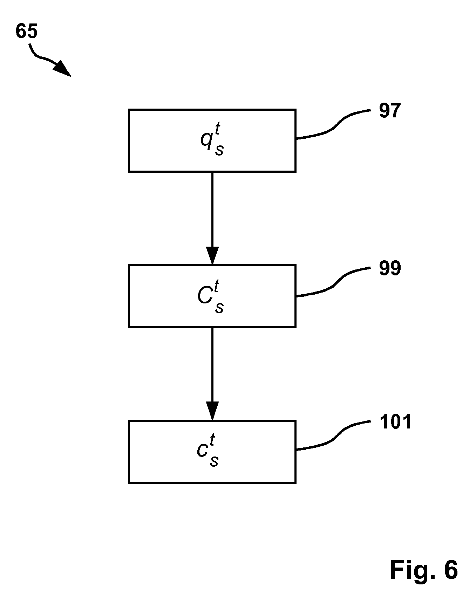

Figure 6 shows step 65 for calculating the adapted estimated values in more detail. A first sub-step 97 of step 65 calculates a class specific quotient $q_s^t$ for at least one class by multiplying the number $N_s^t$ of currently processed requests of a certain class s with the estimated value $c_s^0$ of that class s and dividing the result by the sum of all requests weighted with the respective estimated value $c_s^0$, i.e

$$q_s^t = \frac{N_s^t \cdot c_s^0}{\sum_{s \in S} N_s^t \cdot c_s^0} = \frac{N_s^t \cdot c_s^0}{\widetilde{C^t}} \qquad (3)$$

A further sub-step 99 determines a current resource consumption $C_s^t$ of all requests of a certain class s by multiplying the class specific quotient $q_s^t$ with the momentary total resource consumption $C^t$, i.e.

$$C_s^t = q_s^t \cdot C^t \qquad (4)$$

Finally a sub-step 101 of step 65 calculates the adapted estimated value $c_s^t$ by dividing the result $C_s^t$ of step 99 by the current number of requests $N_s^t$ of the respective class s, i.e.

$$c_s^t = \frac{C_s^t}{N_s^t} = \frac{c_s^0 \cdot C^t}{\sum_{s \in S} N_s^t \cdot c_s^0} = c_s^0 \frac{C^t}{\widetilde{C^t}} \qquad (5)$$

In other words, the individual estimated values $c_s^0$ are multiplied with the ratio of the measured resource consumption $C^t$ to the estimated resource consumption $C^t$ in order to obtain the adapted estimated values $c_s^t$. In a preferred embodiment, the above calculations are performed for each considered class s ∈ S in order to obtain adapted estimated values $c_s^t$ of every considered class.

In an embodiment, the method 53 comprises a step 103 for modifying a placement policy for the placement of arrived or generated processing requests on individual cores 27 during a start-up operating phase of the baseband processing unit 23. Step 103 may e.g. be part of the request dispatcher 81. The modified placement policy aims at reaching a coherent state for at least one, preferably all, request classes as soon as possible so that the calibration step 93 will be carried out for the individual classes soon after the start of the method 53.

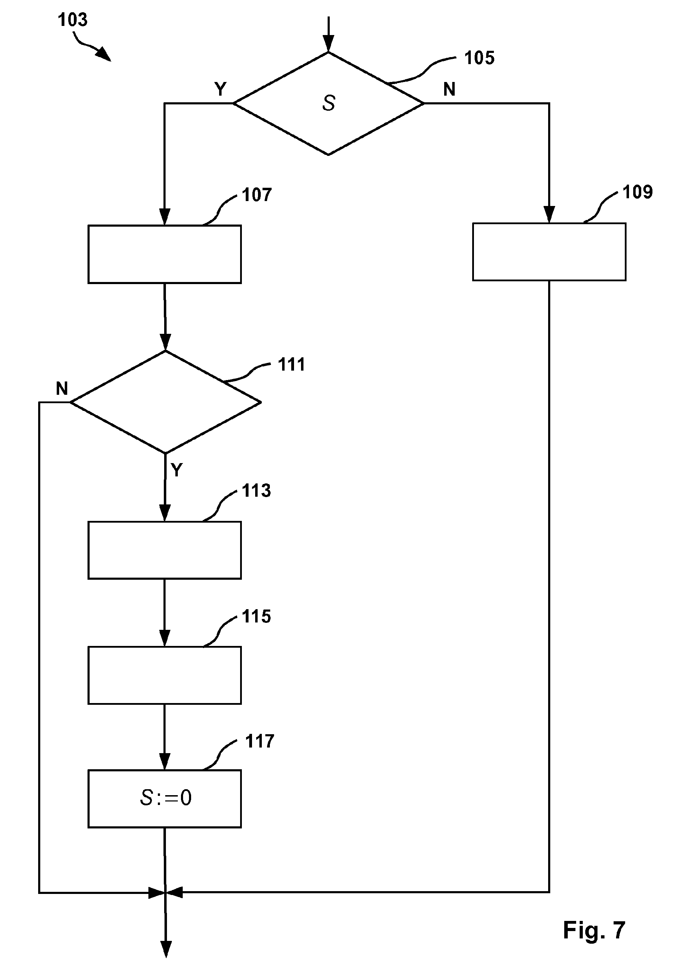

A more detailed flow chart of step 103 is shown in Figure 7. A branch 105 checks whether the method 53 is in the start-up operating phase. For example, this check may be performed by verifying whether a start-up flag S indicating that the method 53 is in the start-up operating phase is set. If so (Y), a step 107 for performing a placement decision according to the modified placement policy is executed. Otherwise (N), a step 109 for performing a placement decision according to a standard placement policy is performed.

The modified placement policy assigns requests such that at least one selected core 27 receives requests of a single class. Preferably, multiple cores 27 for multiple request classes are selected. Eventually, the selected cores will reach a coherent state and the calibration 93 will be performed for the respective class on the respective selected core 27. In contrast to the modified policy, the standard policy aims at efficient usage of the resource units (cores 27). For example, the standard policy may assign a new request to a resource unit based on the occupation $C^t$ of the resource units and/or the estimated values $c_s^t$. In the shown embodiment, the standard policy places requests on the cores 27 regardless of whether or not one or more cores 27 will process requests of different classes simultaneously.

A branch 111 checks whether a condition for finishing the start-up operation phase is fulfilled. For example, the start-up phase may be finished when a certain number of baseband processing requests have been arrived and/or when a predefined time interval has elapsed. If branch 111 decides that the start-up phase has not yet finished (N) then step 103 is terminated; otherwise (Y), steps 113, 115 and 117 are executed.

Depending on the number and class of requests that have arrived or have been generated during the start-up operating phase, the method 53 may have performed no calibration at all, calibrations for a subset of all existing request classes or - in the ideal case - calibrations for every request class. In case that there are request classes for which the calibration 93 has not been performed, the optional steps 113 and 115 may calculate estimated values $c_s^0$ that are not based on the calibration but are more accurate than the initial values $c_s^{0,start}$.

Step 113 may retrieve the estimated values $c_s^0$ for which calibration has not yet been performed from different cores 27, baseband processing units 23 or even different baseband processing nodes 15. To this end, the cores 27 may maintain a history memory containing results of already performed calibrations so that step 113 may retrieve the values $c_s^0$ (or raw values form which the values $c_s^0$ can be calculated) from the history memory. Step 113 may retrieve multiple values related to the same request class and calculate a mean value of said multiple values. The mean value may be used as the estimated value $c_s^0$. In an embodiment, multiple values calculated in different calibration operations related to the same request class may be stored in the history memory. The estimated value may be calculated from an average value of these multiple stored values.

If there are still unknown estimated values $c_s^0$ for one or more request classes after step 113 has been executed then step 115 may approximate the unknown estimated values based on the known estimated values related to one or more different request classes, which known estimated values may have already been determined by calibration and or retrieved by step 113.

Step 117 records that the start-up operating phase is finished e.g. by clearing the initially set start-up flag S. Applying the start-up operating phase has the effect that rather accurate estimated values $c_s^0$ are obtained quickly and the method 53 can switch over to the standard placement policy soon. Due to the rather accurate estimated values $c_s^0$, the probability that a further calibration is triggered in block 69 is comparatively low. Consequently, the method 53 operates efficiently because potentially resource-consuming (i.e. inefficient) further calibrations can be avoided in many cases.

In the following, the method 53 is illustrated by way of a numerical example. For the sake of simplicity, only two classes of baseband processing requests are considered. A first class *a* shall be related to request for processing of audio streams like a voice call. A second class *v* may refer to requests for processing video data. That is, S = {*a, v*}. The resource consumption shall be expressed in operations per second (1 kops = 1000 operations per second; 1 mops = 1000000 operations per second).

Initially, the following numerical values are assumed:

$$c_a^0 = 200 \text{ kops}, c_v^0 = 2 \text{ mops}, N_a^0 = 100, N_v^0 = 5.$$ The latter two values correspond to the number of requests being processed at a certain time $t_0$. At to, the estimated resource consumption of all request is 30 mops.

At a later point in time t, i.e. after the interval $\Delta t$ has elapsed and/or a new baseband processing request has arrived, step 61 measures a total resource consumption of $C^t = 50$ mops. In addition, the number of requests has changed and step 63 determines the following values of currently running requests: $N_a^t = 80$ and $N_b^t = 9$. Based on these values $C^t, N_a^t, N_b^t$, step 65 calculates the following values in order to determine the adapted values:

$q_a^t = 8/17, q_v^t = 9/17, C_a^t = 23.53 \text{ mops}, C_v^t = 26.47 \text{ mops}.$ The resulting adapted values are $c_a^t = 294 \text{ kops}$ and $c_v^t = 2.94 \text{ mops}.$

In step 67, the estimated total resource consumption is $\widetilde{C^t} = 34 \text{ mops}.$ Based on this value of the estimated total resource consumption and the measured total resource consumption $C^t = 50$, the relative deviation is calculated:

$$\varepsilon_r^t = (50 \text{ mops} - 34 \text{ mops})/50 \text{ mops} = 32\% \qquad (6)$$

Step 67 would then decide depending on the predefined thresholds $\hat{\varepsilon}$ whether the calibration will be performed.

To sum up, the method 53 and device 23 described herein allows to estimate the resource consumption of a baseband processing request in a radio access network 13 relatively precisely because estimated values $c_s^0$ of the resource consumption are adapted based on the measured total resource consumption value $C^t$. When the adaptation is performed iteratively, the accuracy of the estimated values $c_s^0$ can be further improved. Moreover, a calibration 69 may be performed if the deviation $\varepsilon_r^t$ of the measured total resource consumption value $C^t$ from the estimated total resource consumption value $\widetilde{C^t}$ exceeds the predefined threshold $\hat{\varepsilon}$. The comparatively precise estimated values $c_s^0$ of resource consumption may be used by the resource manager 45 for more efficient scheduling of resource units (e.g. the cores 27) that process the individual baseband processing requests.

**Claims**

1. Resource management method (53) for managing computational resources (27) of a baseband processing arrangement (15) for a wireless access network (13), the method (53) comprising

    - defining (57) an estimated value $\left(c_s^0\right)$ describing an estimated amount of said resources (27) required for processing a processing request of a predefined request class;

    wherein the method (53) further comprises

    - determining (61) a measured total resource consumption value ($C^t$) describing an occupation of the resources (27) at a point in time;

    - determining (63) a number $\left(N_s^t\right)$ of processing requests of the predefined request class processed simultaneously by the resources (27) at the point in time; and

    - adapting (65) the estimated value $\left(c_s^0\right)$ based on the total resource consumption value ($C^t$) and on the number $\left(N_s^t\right)$ of processing requests.

2. Method (53) according to claim 1, wherein the adapting (65) comprises calculating an adapted estimated value $\left(c_s^t\right)$ from the estimated value $\left(c_s^0\right)$, the total resource consumption value ($C^t$) and the number of processing requests $\left(N_s^t\right)$.

3. Method (53) according to claim 2, wherein the adapting (65) is executed iteratively, wherein for at least one iteration; preferably for all iterations performed after an initial iteration; defining the estimated value includes using (71) the adapted value $\left(c_s^t\right)$ calculated in a previous iteration as the estimated value $\left(c_s^0\right)$.

**4.** Method (53) according to claim 3, wherein the method (53) comprises limiting a rate of performed iterations by enforcing a minimum interval ($\Delta t$) between subsequent iterations.

**5.** Method (53) according to one of the precedent claims, wherein the estimated value $\left(c_s^0\right)$ and/or the adapted estimated value $\left(c_s^t\right)$ and the respective number of processing requests $\left(N_s^t\right)$ are determined separately for multiple predefined request classes.

**6.** Method (53) according to one of the precedent claims, wherein the method (53) comprises calibrating (69; 93) the estimated value $\left(c_s^0\right)$ based on a measured resource consumption of requests of a certain class and the number of requests $\left(N_s^t\right)$ of that class simultaneously processed by the resources (27).

**7.** Method (53) according to claim 6, wherein the calibrating (93) is triggered (91) if a unit (27) of the resources processes requests of a single class only.

**8.** Method (53) according to claim 6 or 7, wherein the method (53) comprises deciding (67) if calibration is needed based on an error metric $\left(\varepsilon_r^t\right)$ describing a deviation of an estimated total resource consumption value from the measured total resource consumption value ($C^t$).

**9.** Method (53) according to claim 8, wherein the error metric is a relative deviation $\left(\varepsilon_r^t\right)$ of the estimated total resource consumption value from the measured total resource consumption value ($C^t$).

**10.** Method (53) according to claim 8 or 9, wherein the method (53) comprises preventing (77) a selected resource unit (CC) from accepting new requests of a class that differs from a selected calibration class (CS) if a result of the deciding is that calibration is needed.

**11.** Method (53) according to one of the precedent claims, wherein the method (53) comprises a start-up operating phase during which a modified placement policy for placing processing requests to individual resource units (27) of the processing resources is applied (107), wherein the modified placement policy differs from a standard policy applied (109) after the start-up operating phase is finished.

**12.** Method (53) according to claim 11, wherein the modified placement policy comprises placing (107) requests to the resource units (27) such that at least one resource unit (27) receives requests of a single class.

**13.** Resource management device (23) for a baseband processing arrangement (15) of a wireless access network (13), the device being operable for

- defining (57) an estimated value $\left(c_s^0\right)$ describing an estimated amount of said resources (27) required for processing a processing request of a predefined request class;

wherein the device (23) is further operable for

- determining (61) a measured total resource consumption value ($C^t$) describing an occupation of the resources (27) at a point in time;

- determining (63) a number $\left(N_s^t\right)$ of processing requests of the predefined request class processed simultaneously by the resources (27) at the point in time; and

- adapting (65) the estimated value $\left(c_s^0\right)$ based on the total resource consumption value ($C^t$) and on the number $\left(N_s^t\right)$ of processing requests.

**14.** Device according to claim 13, wherein the device (23) is operable, preferably programmed, for executing a method (53) according to one of claims 1 to 12.

**15.** Computer program product, preferably a computer readable storage medium (31, 35), comprising a computer program that is programmed for executing a method (53) according to one of claims 1 to 12 when run on a computer (23).

**Fig. 1**

**Fig. 2**

53

55

$$c_s^0 := c_s^{0,start}$$

57

B

$$\Delta t$$

59

$$C^t$$

61

$$N_s^t$$

63

$$c_s^t(C^t, N_s^t)$$

65

A

**Fig. 3**

Fig. 4

81

$REQ(s)$ — 83

$N_s^t ++$ — 85

— 103

87

N

Y

$N_s^t := N_s^t - T(s)$ — 89

91

N

$N_{CS}^t \neq 0$

Y

$c_s^0 := C_{CC}/N_{CS}^t$ — 93

$R := 0$ — 95

**Fig. 5**

65

$q^t_s$ — 97

$C^t_s$ — 99

$c^t_s$ — 101

**Fig. 6**

103

105

Y  S  N

107

109

111

N

Y

113

115

117

$S:=0$

**Fig. 7**

Europäisches
Patentamt

European
Patent Office

Office européen
des brevets

## EUROPEAN SEARCH REPORT

Application Number

EP 14 30 5525

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/126547 A1 (WALDSPURGER CARL A [US]) 29 May 2008 (2008-05-29)<br>* abstract *<br>* paragraph [0003] *<br>* paragraph [0017] - paragraph [0028] *<br>* paragraph [0038] - paragraph [0042] *<br>* paragraph [0045] - paragraph [0086] *<br>----- | 1,13-15 | INV.<br>G06F9/50 |
| A | US 2006/212334 A1 (JACKSON DAVID B [US]) 21 September 2006 (2006-09-21)<br>* the whole document *<br>----- | 1-15 | |
| A | GB 2 418 267 A (QINETIQ LTD [GB]) 22 March 2006 (2006-03-22)<br>* the whole document *<br>----- | 1-15 | |
| A | GB 2 416 878 A (UNIV SURREY [GB]) 8 February 2006 (2006-02-08)<br>* the whole document *<br>----- | 1-15 | |
| | | | TECHNICAL FIELDS SEARCHED (IPC)<br><br>G06F |

The present search report has been drawn up for all claims

| Place of search | Date of completion of the search | Examiner |
|---|---|---|
| The Hague | 14 October 2014 | Beltrán-Escavy, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 5525

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2014

| Patent document cited in search report | | Publication date | Patent family member(s) | | Publication date |
|---|---|---|---|---|---|
| US 2008126547 | A1 | 29-05-2008 | US | 7412492 B1 | 12-08-2008 |
| | | | US | 2008126547 A1 | 29-05-2008 |
| | | | US | 2012221732 A1 | 30-08-2012 |
| US 2006212334 | A1 | 21-09-2006 | CA | 2601384 A1 | 26-10-2006 |
| | | | EP | 1866767 A2 | 19-12-2007 |
| | | | EP | 2348409 A1 | 27-07-2011 |
| | | | EP | 2360587 A1 | 24-08-2011 |
| | | | EP | 2360588 A1 | 24-08-2011 |
| | | | EP | 2360589 A1 | 24-08-2011 |
| | | | EP | 2362310 A1 | 31-08-2011 |
| | | | US | 2006212332 A1 | 21-09-2006 |
| | | | US | 2006212333 A1 | 21-09-2006 |
| | | | US | 2006212334 A1 | 21-09-2006 |
| | | | US | 2006212740 A1 | 21-09-2006 |
| | | | US | 2006224741 A1 | 05-10-2006 |
| | | | US | 2010192157 A1 | 29-07-2010 |
| | | | US | 2013151711 A1 | 13-06-2013 |
| | | | US | 2014129721 A1 | 08-05-2014 |
| | | | WO | 2006107531 A2 | 12-10-2006 |
| | | | WO | 2006112980 A2 | 26-10-2006 |
| | | | WO | 2006112981 A2 | 26-10-2006 |
| | | | WO | 2008036058 A2 | 27-03-2008 |
| GB 2418267 | A | 22-03-2006 | CA | 2578863 A1 | 16-03-2006 |
| | | | CN | 101052981 A | 10-10-2007 |
| | | | EP | 1787247 A1 | 23-05-2007 |
| | | | GB | 2418267 A | 22-03-2006 |
| | | | JP | 2008512757 A | 24-04-2008 |
| | | | US | 2008109343 A1 | 08-05-2008 |
| | | | WO | 2006027557 A1 | 16-03-2006 |
| GB 2416878 | A | 08-02-2006 | GB | 2416878 A | 08-02-2006 |
| | | | US | 2006031509 A1 | 09-02-2006 |

EPO FORM P0459

For more details about this annex : see Official Journal of the European Patent Office, No. 12/82